# EUROPEAN PATENT APPLICATION

(11) **EP 4 685 724 A1**
(43) Date of publication of application: **28.01.2026**
(21) Application number: 25191136.8
(22) Date of filing: 22.07.2025
(51) Int. Cl.: G06Q 30/0214

(54) **REVERSE PYRAMID COMPENSATION COMMISSION SYSTEM**

(30) Priority: 23.07.2024 TW 113207901 U
(71) Applicant: Chi, Yu Min, Taoyuan City 330002 (TW)
(72) Inventor: Chi, Yu Min, Taoyuan City 330002 (TW)
(74) Representative: Cabinet Chaillot

(57) **Abstract**

A reverse pyramid compensation commission system, includes: a server host (10), having a microprocessor (11), the microprocessor (11) is connected to a memory module (12), a login module (13), an organization chart construction module (14) and a compensation commission distribution module (15); an operation interface (16), connected to the server host (10) for inputting member information into the login module (13); a display device (30), connected to the server host (10) for displaying member information; characterized in that the organization chart construction module (14) make every new member (A0) to connect from the previous upline (A1) to the top upline member (An) one by one, and all the nth upline members converted into nth independent downline members of the new member (A0), allowing each new member (A0) to get the compensation commission of nth independent downline members and their recruited members.

## Description

### BACKGROUND OF THE INVENTION

### 1. Field of the Invention:

A reverse pyramid compensation commission system, especially one that has "upward development" and "parallel independent" calculating system.

### 2. Description of the Related Art:

The term 'multi-level marketing" means the marketing practice to establish multi-levels organization by having participants introduce new participants into multi-level marketing enterprise, and promote and sale goods or services.

The term "multi-level marketing enterprise" means the companies, sole proprietorships or partnerships, groups or individuals that conduct overall planning or the carrying out of multi-level marketing activities as referred to in the preceding article.

A participant of foreign multi-level marketing enterprise or a third party that introduces or carries out the multi-level marketing plans or organizations of such enterprise shall be deemed a "multi-level marketing enterprise" as referred to in the preceding paragraph.

The term "participants" means persons who may earn commissions, bonuses and other economic benefits by taking part in the plans of a multi-level marketing enterprise and promoting or selling goods or services, and who may earn commissions, bonuses and other economic benefits by introducing other persons to participate, to promote, sell goods or services or introduce more persons.

The persons who enter into contracts with multi-sale enterprises that after meeting specific conditions such persons may get the qualification to promote, sell goods or services, or to introduce other persons to participate shall be deemed as participants from the time such contracts are entered into.

Simply put, multi-level marketing is a business that formulates a set of operating plans or regulations and attempts to use "interpersonal relationships" to establish a multi-level marketing organization to promote products. In this marketing organization development plan, in addition to purchasing goods for consumption, the main idea is to allow the new recruited members (distributors) to obtain the right to sell goods to general consumers, so as to earn profits from it; they can also recruit others to join as a member of organization to build their own sales organization. The collection of all organizations established by individual members is the entire multi-level marketing organization network.

However, the traditional multi-level marketing compensation commission system, the main commission modes include: single-level mode, multi-level mode, binary plan mode, three-plan mode, and multi-plan mode, etc.; however, no matter what commission system is used, its organizational structures is all a pyramid type; that is, one person recruits many, and then many recruit more, and those gain the greatest benefits are those at the top. Those who join last or those who join without having followed recruited members will not be able to earn commission, thereby hindering the further development of the organization, which is a disadvantage of the system.

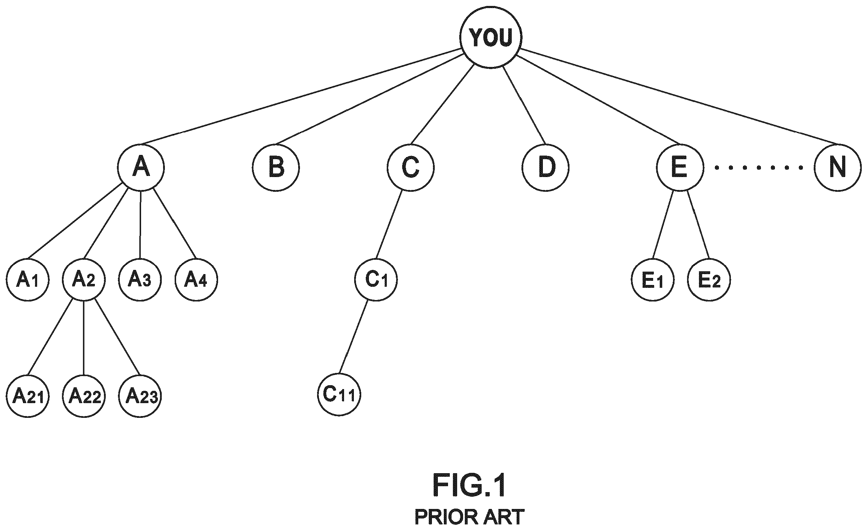

First, referring to FIG.1, which discloses a multi-level mode, one can recruit his downline member A, B, C, D, and E. Then A and C can recruit more downline to join the organization, A has downline A1~A4, C has downline C1, then, A2 further recruits A21~A23, and C1 recruits C11. This kind of multi-level mode direct sale system generally has good initial income growth, but as the organization expands, it takes a lot of time to manage, and performance pressure will also increase, making it difficult for the company to expand to a certain scale, and the time cost and management cost will increase.

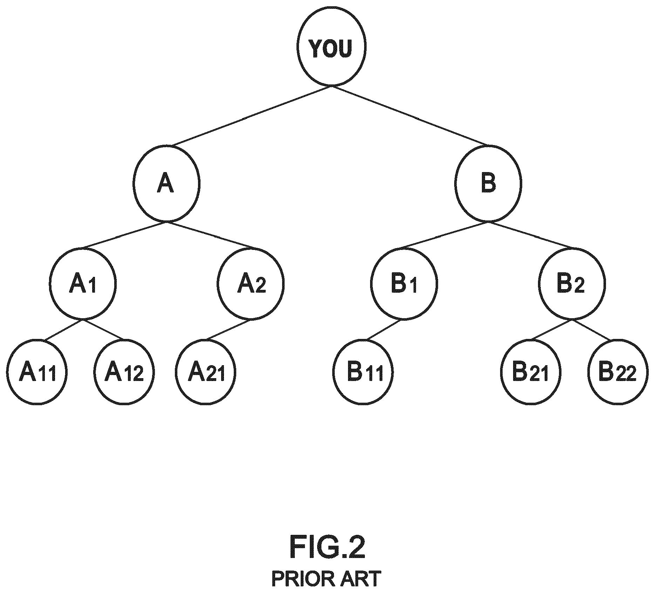

Referring to FIG. 2, which discloses a binary plan marketing compensation commission system, the one only has branch of two line, which means the member only needs to manage two markets, A1 and A2, the extra human resources will give away to the downline of the one, so the downline can receive the assistance from the upline, which reduces the difficulty of operation and increases the stability of the team. Use the shape of a binary tree in computer programming to manage the team with one in charge for two and two in charge for four, in order to form an efficient and orderly management, maximizing the overlap of the performance and interests of upline and downline. However, in binary plan marketing compensation commission system, although each member only needs to manage two downline so as to reduces the difficulty of operation, due to the small number of downline of each member, it is easy to encounter personnel problems that affect operational efficiency, and uneven performance often occurs, resulting in unfair commission distribution, and some member are unable to receive equivalent commission. The biggest problem of the binary plan marketing compensation commission system is uneven development of two line and the member is unable to receive equivalent commission. FIG. 1 and FIG. 2 are disclosed in Taiwan patent Published No. 201437937.

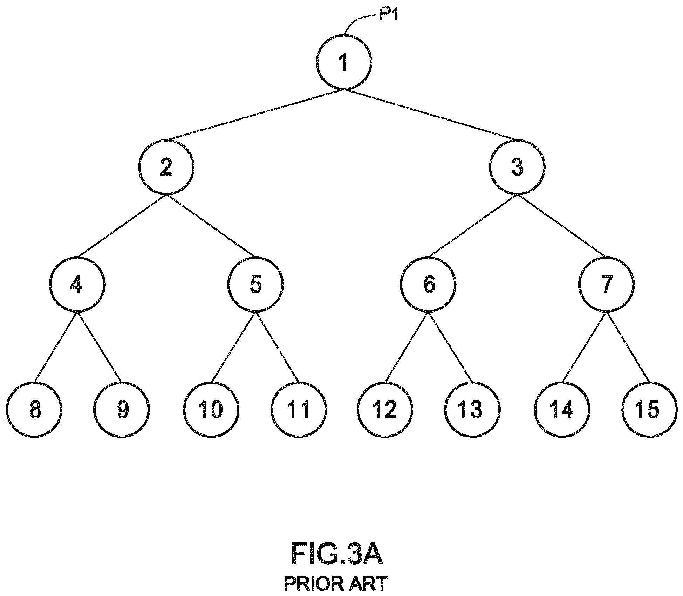

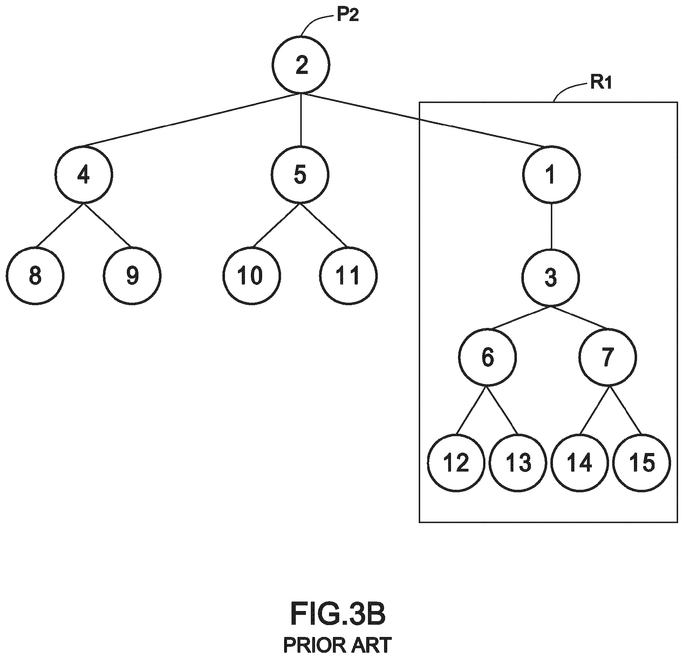

Referring to FIG. 3A and FIG. 3B, Taiwan patent No. 107209091, which disclosed an AMB commission calculation system, first the normal organization chart P1 as showing in FIG. 3A is rearranged by an organization calculating module into FIG 3B, the ∘,2 in the chart P2 connects to downline ∘,4 and ∘,5 as in chart P1, ∘,4 connects to downline ∘,8 and ∘,9, 0,5 connects to downline ○,10 and ○,11, and further generates a third chart R1 for ∘,1 to connect, ∘,1 connects to downline ∘,3, ∘,3 connects to downline ∘,6 and ∘,7, ∘,6 connects to downline ∘,12 and ∘,13, ∘,7 connects to downline ∘,14 and ∘,15, the organizational arrangement of third chart R1 is based on the inverse link order of ∘,2 of the organization chart P1 in FIG. 3A to all derived members. This commission calculation system is different from the commission distribution model adopted by ordinary companies. Generally, commission is paid from top to bottom, and the performance of the downline is collected by the upline. This commission system allows every member to be the number 1 of all members when opening the organization chart, it represents a reward model that no matter when the new member is joint, said member will be linked to all members and their performance. However, AMB commission calculation system is system of "binary plan" and "resettlement upward", so the organization chart is leaned to the third downline R1.

Therefore, from the above-mentioned various conventional commission systems can tell that if the proportion of commission is overemphasized, and the commissions are not correctly calculated by computer, it will cause a crisis in the company's operation due to give out too much wrong calculated commission, and the downline members will lose the trust with the system due to the reduce of profits, which may even lead to a crisis of product return request, causes the company's having operations crisis.

### SUMMARY OF THE INVENTION

A primary objective of the present invention is to provide a reverse pyramid compensation commission system, which combines "resettlement upward" and "recommendation upward" to form a new calculate system, allowing each new member to get the compensation commission of nth independent downline members and their recruited members through the calculation of the compensation commission distribution module

Another objective of the present invention is to provide a reverse pyramid compensation commission system, through the calculation of the compensation commission distribution module, the company will not give out too much incorrect commission, and can avoid a crisis in the company's operation.

In order to achieve above objectives, the present invention includes: a server host, having a microprocessor, the microprocessor is connected to a memory module, a login module, an organization chart construction module and a compensation commission distribution module; an operation interface, connected to the server host for inputting member information into the login module; a display device, connected to the server host for displaying member information; characterized in that the microprocessor uses the organization chart construction module to make every new member (A0) to connect from the previous upline (A1) to the top upline member (An) one by one, then the organization of all the nth upline members and their recruited members are cut off, and instantly converted into nth independent downline members of the new member (A0), and then recorded by the memory module, allowing each new member (A0) to get the compensation commission of nth independent downline members and their recruited members through the calculation of the compensation commission distribution module.

Also, preferably, the microprocessor of the server host has data computing capabilities and can retrieve data through the operating interface or the memory module, after calculation, the data is stored in the memory module and displayed or output by the display device.

Also, preferably, the memory module stores member information and setting information, and the microprocessor of the server host will retrieve the required data from the memory module according to the setting information.

Also, preferably, the organization chart construction module is an "upward development" and "parallel independent" organization chart system, so that the new member (A0)'s previous upline (A1) includes: "resettlement upward" and "recommendation upward".

Also, preferably, the organization chart system of the organization chart construction module, its applicable modes include: single-level mode, multi-level mode, binary plan mode, three-plan mode, and multi-plan mode.

The present invention has below effects:
1. The reverse pyramid compensation commission system is combined by "upward development" and "parallel independent" system, through the organization chart construction module, allowing each new member to reversely connect to all the nth upline members, and allowing each new member to get the compensation commission of nth independent downline members and their recruited members.
2. The reverse pyramid compensation commission system is an improved multi-level marketing system, it can solve the disadvantage of binary plan system of uneven commission, and can avoid operation crisis of giving out wrong number of commissions through the compensation commission distribution module.
3. The reverse pyramid compensation commission system is an "upward development" and "parallel independent" system, its applicable modes include: single-level mode, multi-level mode, binary plan mode, three-plan mode, and multi-plan mode.
4. The "upward development" of the reverse pyramid compensation commission system of the present invention can be "resettlement upward" and "recommendation upward".

### BRIEF DESCRIPTION OF THE DRAWINGS

FIG. 1 is a schematic diagram illustrating the multi-level marketing system of the prior art;
FIG. 2 is a schematic diagram illustrating the binary plan marketing system of the prior art;
FIG. 3A is a schematic diagram illustrating the application of the prior art, Taiwan Patent No. 107209091;
FIG. 3B is another schematic diagram illustrating the application of the prior art, Taiwan Patent No. 107209091;
FIG. 4 is a block diagram of the preferred embodiment of the present invention;
FIG. 5 is a schematic diagram illustrating the resettlement upward binary plan organization form by the organization chart construction module of the present invention;
FIG. 6 is a schematic diagram illustrating the commission structure of the resettlement upward binary plan organization form in FIG. 5;
FIG. 7 is a schematic diagram illustrating the recommendation upward binary plan organization form by the organization chart construction module of the present invention;
FIG. 8 is a schematic diagram illustrating the commission structure of the recommendation upward binary plan organization form in FIG. 7;
FIG. 9 is a schematic diagram illustrating the resettlement upward three-plan organization form by the organization chart construction module of the present invention;
FIG. 10 is a schematic diagram illustrating the commission structure of the resettlement upward three-plan organization form in FIG. 9;
FIG. 11 is a schematic diagram illustrating the recommendation upward three-plan organization form by the organization chart construction module of the present invention;
FIG. 12 is a schematic diagram illustrating the commission structure of the recommendation upward three-plan organization form in FIG. 11.

### DETAILED DESCRIPTION OF THE PREFERRED EMBODIMENT

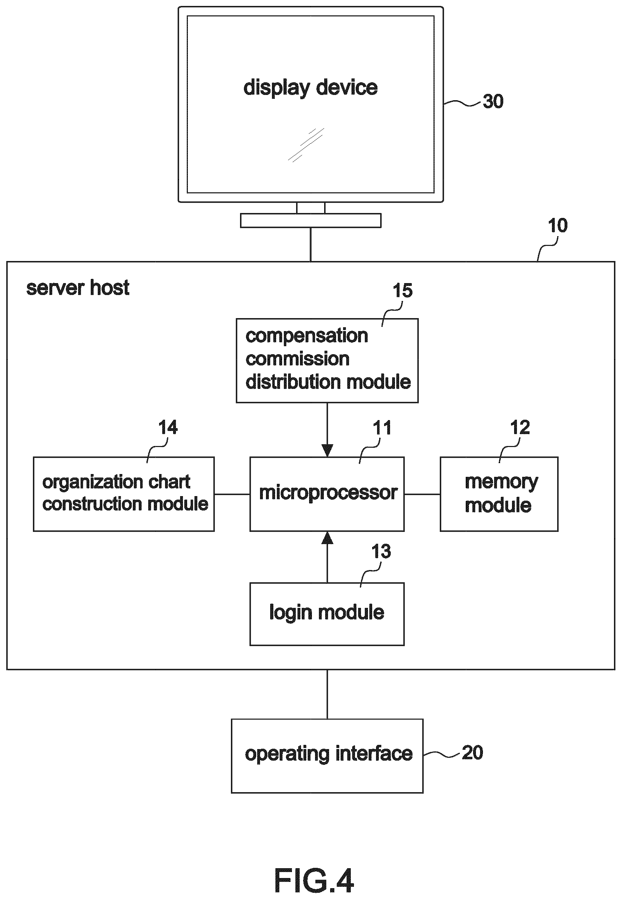

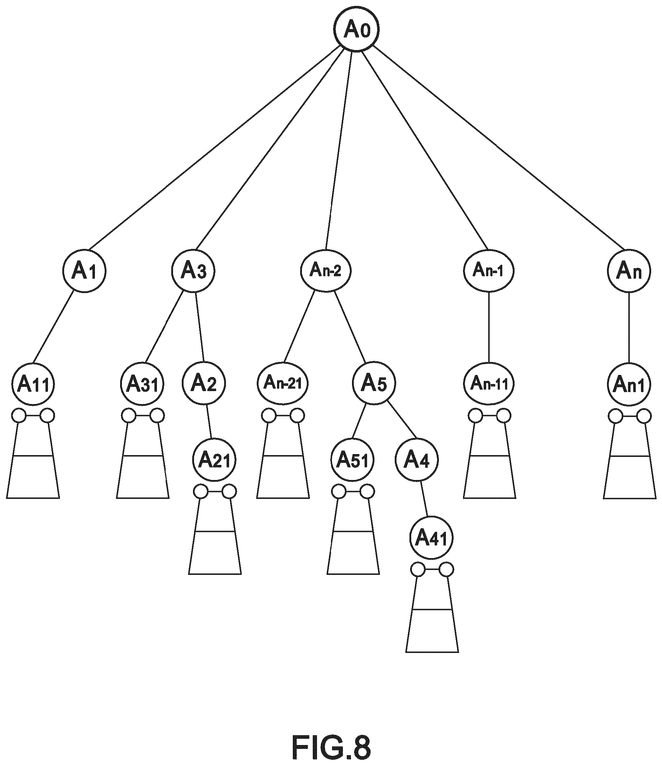

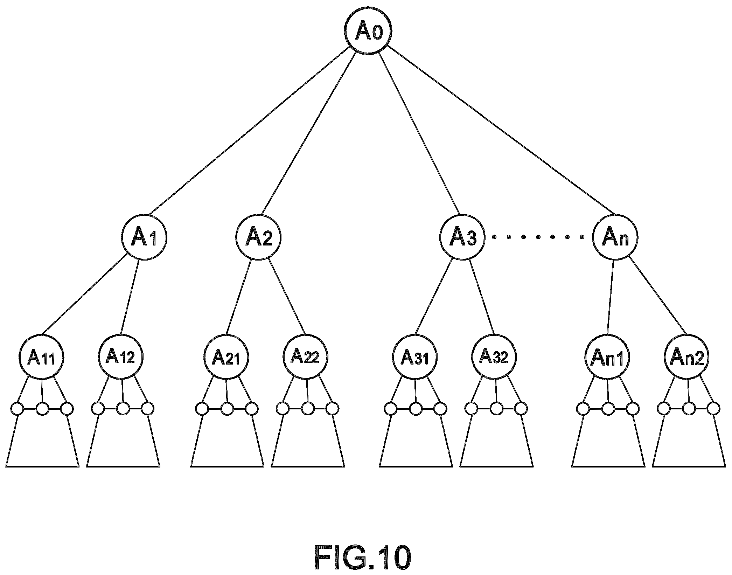

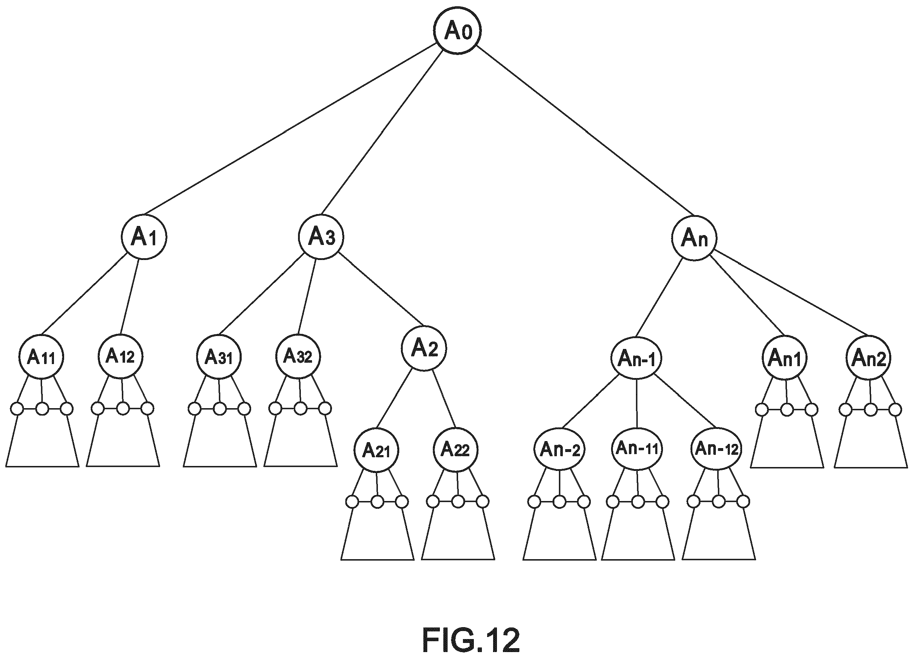

Referring to FIGS. 4~12, a preferred embodiment of the reverse pyramid compensation commission system, as showing in FIG.4, includes: a server host **10,** having a microprocessor **11,** the microprocessor **11** is connected to a memory module **12,** a login module **13,** an organization chart construction module **14** and a compensation commission distribution module **15;** in this embodiment, the microprocessor **11** of the server host **10** has data computing capabilities and can retrieve data through an operating interface **20** or the memory module **12,** after calculation, the data is stored in the memory module **12** and displayed or output by the display device **30.**

In this embodiment, the memory module **12** stores member information and setting information, and the microprocessor **11** of the server host **10** will retrieve the required data from the memory module **12** according to the setting information.

An operation interface **20,** connected to the server host **10** for inputting member information into the login module; a display device **30,** connected to the server host **10** for displaying member information.

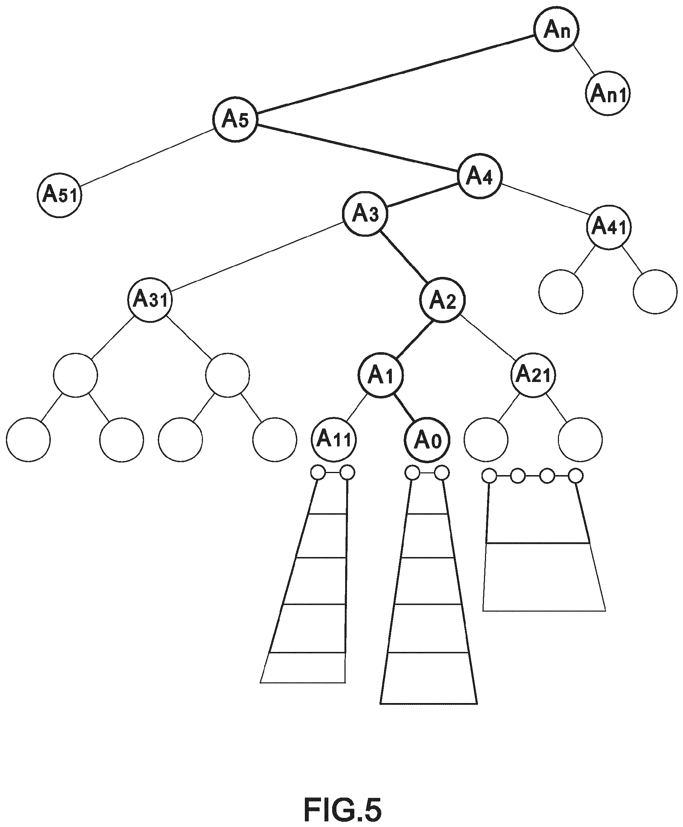

Referring to FIGS 5~6, the microprocessor **11** uses the organization chart construction module **14** to make every new member (A0) to connect from the previous upline (A1) to the top upline member (An) one by one through "resettlement upward" or "recommendation upward", in this embodiment is a resettlement upward binary plan system, then the organization of all the nth upline members and their recruited members are cut off, and instantly converted into nth independent downline members of the new member (A0), and then recorded by the memory module **12,** so as to form a "parallel independent" state, allowing each new member (A0) to get the compensation commission of nth independent downline members and their recruited members through the calculation of the compensation commission distribution module **15.**

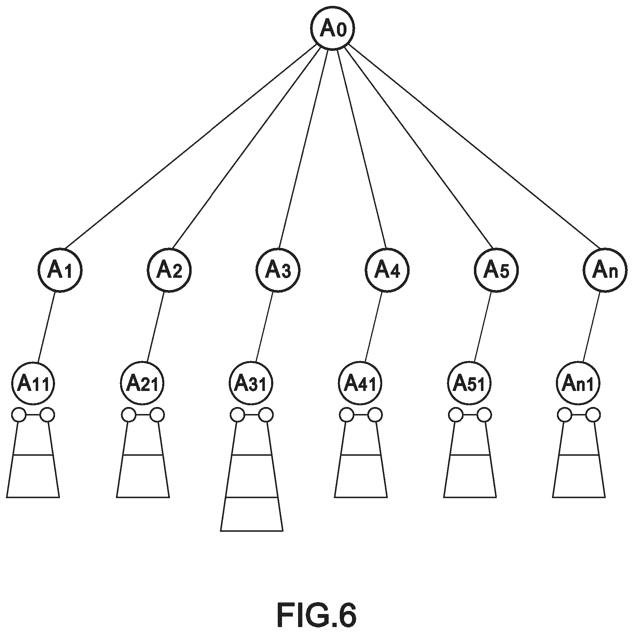

Referring to FIG.6, the organization chart construction module **14** allows every member to be the number 1 of all members when opening the organization chart, the original upline members (A1)~(An) and their recruited members will be connected to new member (A0), for example, the member (A1) was the upline of the new member (A0), under the resettlement upward binary plan system, the member (A1) and his recruited member (A11) are convert into downline of the new member (A0), so as the member (A2) and his recruited member, etc. Therefore, (A1)~(An) form a "parallel independent" state, allowing each new member (A0) to get the compensation commission of nth independent downline members and their recruited members through the calculation of the compensation commission distribution module **15.**

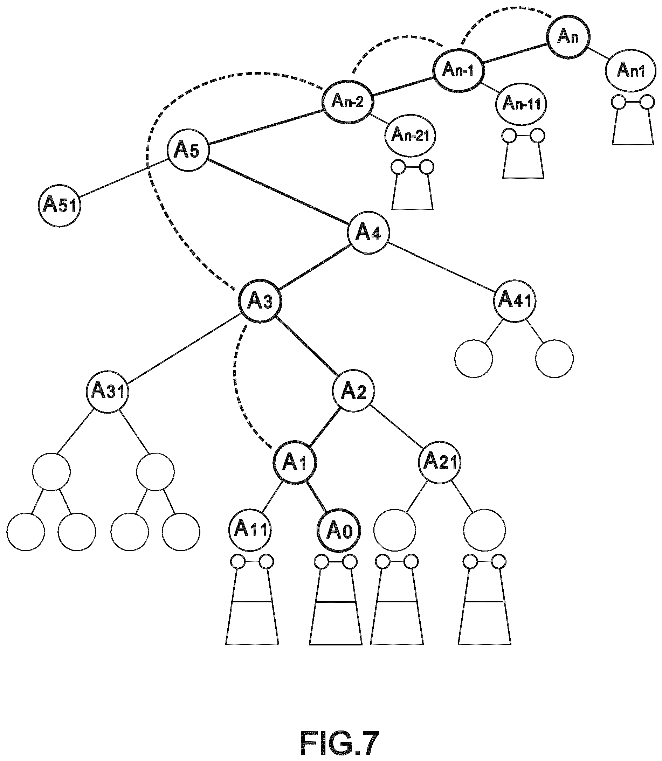

Referring to FIGS. 7~8, which showing an embodiment of recommendation upward binary plan system, the differences between this embodiment and the above mentioned "upward development" and "parallel independent" organization chart system are: under the recommendation upward binary plan system, only those with recommended relationships will develop upwards, which is different form the connection of resettlement upward binary plan system. For example: the dotted line shows the recommendation relationship, starting from the previous upline (A1) → (A3) → (An-2) → (An-1)..., linking one by one to the top upline member ( An). (A0) becomes the upline of the original first upline member (A1), and the downline members (A11) of the original first upline member (A1) and their downline members are instantly converted into independent downlines of the new member (A0), and the downline members (A31) and (A2) of the recommended upline member (A3) and their downline members are instantly converted into independent downlines of the new member (A0), etc. Therefore, (A1), (A3), (An-2), (An-1), (An) are form to a "parallel independent" state, allowing each new member (A0) to get the compensation commission of nth independent downline members and their recruited members through the calculation of the compensation commission distribution module **15.**

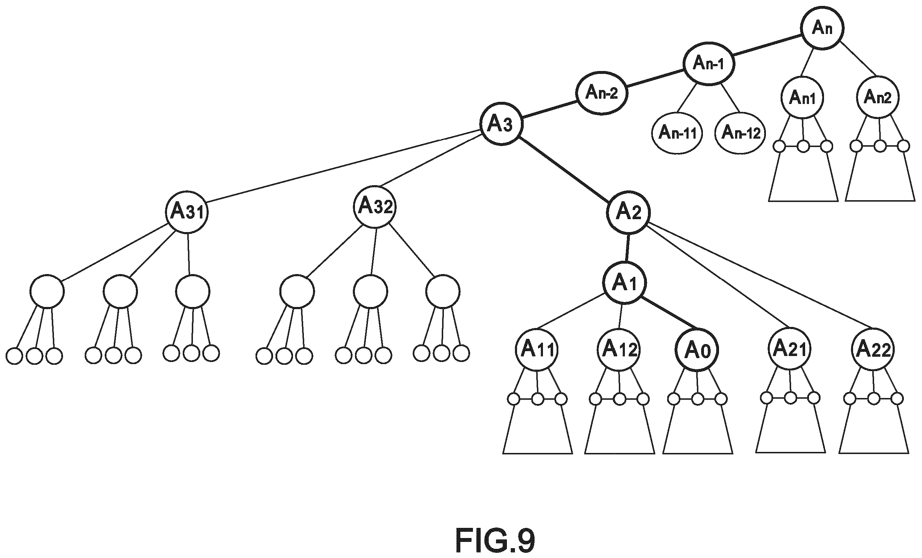

Referring to FIGS. 9~10, which showing an embodiment of resettlement upward three plan system, the differences between this embodiment and the above mentioned "upward development" and "parallel independent" organization chart system are: it is a three plan system, the features are basically same the resettlement upward binary plan system but under three plan, so will not be describe in detail.

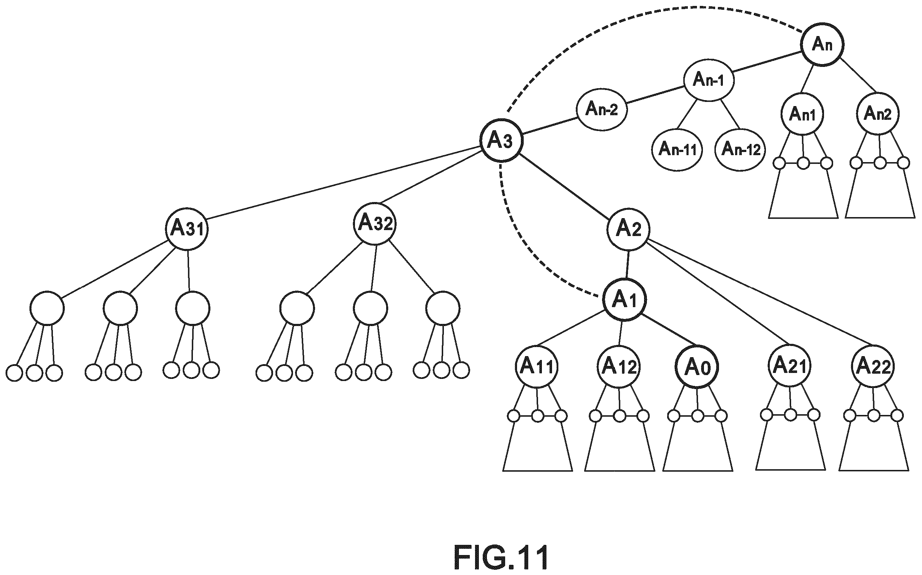

Referring to FIGS. 11~12, which showing an embodiment of recommendation upward three plan system, the differences between this embodiment and the above mentioned "upward development" and "parallel independent" organization chart system are: it is a three plan system, the features are basically same the recommendation upward binary plan system but under three plan, so will not be describe in detail.

The present invention has below effects:
1. The reverse pyramid compensation commission system is combined by "upward development" and "parallel independent" system, through the organization chart construction module, allowing each new member to reversely connect to all the nth upline members, and allowing each new member to get the compensation commission of nth independent downline members and their recruited members.
2. The reverse pyramid compensation commission system is an improved multi-level marketing system, it can solve the disadvantage of binary plan system of uneven commission, and can avoid operation crisis of giving out wrong number of commissions through the compensation commission distribution module **15.**
3. The reverse pyramid compensation commission system is an "upward development" and "parallel independent" system, its applicable modes include: single-level mode, multi-level mode, binary plan mode, three-plan mode, and multi-plan mode.
4. The "upward development" of the reverse pyramid compensation commission system of the present invention can be "resettlement upward" and "recommendation upward".

Although particular embodiments of the invention have been described in detail for purposes of illustration, various modifications and enhancements may be made without departing from the spirit and scope of the invention. Accordingly, the invention is not to be limited except as by the appended claims.

## Claims

1. A reverse pyramid compensation commission system, includes:
a server host (**10**), having a microprocessor (**11**), the microprocessor **(11)** is connected to a memory module (**12**), a login module (**13**), an organization chart construction module **(14)** and a compensation commission distribution module **(15);**
an operation interface (**16**), connected to the server host **(10)** for inputting member information into the login module **(13);**
a display device **(30),** connected to the server host **(10)** for displaying member information;
**characterized in that** the microprocessor **(11)** uses the organization chart construction module **(14)** to make every new member (A0) to connect from the previous upline (A1) to the top upline member (An) one by one, then the organization of all the nth upline members and their recruited members are cut off, and instantly converted into nth independent downline members of the new member (A0), and then recorded by the memory module (**12**), allowing each new member (A0) to get the compensation commission of nth independent downline members and their recruited members through the calculation of the compensation commission distribution module **(15).**

2. The reverse pyramid compensation commission system as claimed in claim 1, **characterized in that** the microprocessor **(11)** of the server host **(10)** has data computing capabilities and can retrieve data through the operating interface or the memory module (**12**), after calculation, the data is stored in the memory module **(12)** and displayed or output by the display device **(30).**

3. The reverse pyramid compensation commission system as claimed in claim 2, **characterized in that** the memory module **(12)** stores member information and setting information, and the microprocessor **(11)** of the server host **(10)** will retrieve the required data from the memory module **(12)** according to the setting information.

4. The reverse pyramid compensation commission system as claimed in claim 1, **characterized in that** the organization chart construction module **(14)** is an "upward development" and "parallel independent" organization chart system, so that the new member (A0)'s previous upline (A1) includes: "resettlement upward" and "recommendation upward".

5. The reverse pyramid compensation commission system as claimed in claim 4, **characterized in that** the organization chart system of the organization chart construction module (**14**), its applicable modes include: single-level mode, multi-level mode, binary plan mode, three-plan mode, and multi-plan mode.
